# EUROPÄISCHE PATENTSCHRIFT

(11) **EP 2 409 616 B1**
(45) Veröffentlichungstag und Bekanntmachung des Hinweises auf die Patenterteilung: **20.03.2013**
(21) Anmeldenummer: 10007502.7
(22) Anmeldetag: 20.07.2010
(51) Int. Cl.: A47J 47/01

(54) **Gutaufnahmebehälter**
Goods container
Récipient destiné à la réception de marchandises

(43) Veröffentlichungstag der Anmeldung: 25.01.2012
(73) Patentinhaber: Wiberg Besitz GmbH, 5020 Salzburg (AT)
(72) Erfinder: Widdison, Leon, 83410 Laufen (DE)
(74) Vertreter: Burger, Hannes

(56) Entgegenhaltungen:
- DE-U- 1 762 658
- DE-U1- 20 206 224

## Beschreibung

Die Erfindung bezieht sich auf einen Gutaufnahmebehälter gemäß dem Oberbegriff des Patenanspruches 1. Ein solcher Gutaufnahmebehälter ist aus der DE 202 06 224 U1 bekannt. Dieser Gutaufnahmebehälter hat einen Deckel mit einer Aussparung die von einer als Schüttvorrichtung geformten Abdeckung verschließbar ist, wobei die Schüttvorrichtung über eine als Scharnier, Materialverdünnung oder Filmscharnier ausgebildete Schwenkachse mit dem Deckel verbunden ist und damit zwischen einer ersten Grenzstellung, in welcher die Aussparung verschlossen ist und einer zweiten Grenzstellung in welcher die Aussparung geöffnet ist, geschwenkt werden kann.

Der Behälter besteht dabei vorzugsweise aus Kunststoffmaterial und ist primär für die Aufbewahrung von schüttfähigen Lebensmitteln bestimmt.

Ähnliche öffenbare und wieder verschließbare Gutaufnahmebehälter sind auch aus der DE 295 01 666 U1, DE 296 07 073 U1, DE 203 15 168 U1, DE 1762658 U1, DE 3004292 A1, DE-PS-849829, WO 2004/026714 A1, US 6,257,449 B1 und US 4,216,880 A bekannt.

Generell ist es wünschenswert bei Gutaufnahmebehältern deren Inhalt von außen bei verschlossenen Behälter sehen zu können, weshalb oftmals die Behälter aus durchsichtigem Glas sind. Andererseits ist es für bestimmte Waren und insbesondere für Gewürze notwendig, diese vor Lichteinfall zu schützen, damit sie ihre Qualität behalten. Aus diesem Grunde werden Gutaufnahmebehälter für Gewürze meist aus lichtundurchlässigem Material hergestellt und durch eine auf dem Behälter angebrachte Beschriftung der Inhalt gekennzeichnet. Diese Beschriftung ist aber durch Verschmutzung beim Hantieren in der Küche oftmals schwer oder gar nicht mehr lesbar. Auch läßt sich der Füllgrad des Behälters visuell nicht feststellen.

Aufgabe der Erfindung ist es, den Gutaufnahmebehälter der eingangs genannten Art dahingehend zu verbessern, daß einerseits sein Inhalt vor Lichteinwirkung geschützt ist und andererseits sein Inhalt visuell von außen überprüfbar ist.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Die Grundidee der Erfindung liegt darin, daß der Behälter aus lichtundurchlässigem Material ein Sichtfenster hat, das in der Schließstellung durch die schwenkbare Schütte vollständig abgedeckt ist und das in der Öffnungsstellung der Schütte und sogar in Teil-öffnungsstellungen der Schütte das Sichtfenster freigibt. In der Schließstellung übergreift die Schütte den Behälter also teilweise und deckt mit einer Vorderwand das Sichtfenster vollständig ab. In der Öffnungsstellung ist die Schütte im Bereich einer (Ausguß)-Öffnung angeordnet und übernimmt ihre eigentliche Funktion als Schütte. Zum vollständigen Verschließen und Öffnen der Öffnung ist die Schütte drehfest mit einer Verschlußklappe verbunden, die somit zusammen mit der Schütte verschwenkt wird und die Öffnung freigibt bzw. verschließt. Die Verschlußklappe ist über die Schwenkachse mit der Schütte verbunden. Die Verschlußklappe ragt in das Innere des Behälters hinein und ist im wesentlichen senkrecht zur Vorderwand der Schütte angeordnet.

Vorzugsweise hat der Deckel des Gutaufnahmebehälters eine Lagerschale zur Aufnahme der Schwenkachse.

In besonders einfacher Weise ist die Schwenkachse der Schütte und der Verschlußklappe zwischen der Lagerschale des Deckels und den Rändern des Behälters gehalten.

Vorzugsweise sind die Schütte, die Schwenkachse und die Verschlußklappe einstückig aus Kunststoff und dann insbesondere im Spritzguß hergestellt, oder aus Metall.

Nach einer Ausgestaltung der Erfindung können an den Rändern des Behälters Teil-Lagerschalen zur Lagerung der Schwenkachse angebracht sein.

Vorzugsweise dient eine in das Innere des Behälters weisende Wand des Deckels als Begrenzungsanschlag für die Schwenkbewegung der Verschlußklappe und damit gleichzeitig auch als Begrenzungsanschlag für die Schwenkbewegung der Schütte.

Im folgenden wird die Erfindung anhand von Ausführungsbeispielen im Zusammenhang mit der Zeichnung ausführlicher erläutert. Es zeigt:
- Fig. 1: eine perspektivische Ansicht des Gutaufnahmebehälters im geöffneten Zustand;
- Fig. 2: eine perspektivische Ansicht des Gutaufnahmebehälters in geschlossenem Zustand;
- Fig. 3-5: verschiedene Seitenansichten der bei dem Gutaufnahmebehälter verwendeten Schütte;
- Fig. 6: eine perspektivische Ansicht der Schütte der Fig. 3-5;
- Fig. 7: eine Ansicht der Innenseite des bei dem Gutaufnahmebehälter verwendeten Dekkels;
- Fig. 8: einen Schnitt längs der Linie A-A der Fig. 7;
- Fig. 9: eine Seitenansicht des Deckels der Fig. 7;
- Fig. 10: einen Querschnitt eines Teils des Behälters mit aufgesetztem Deckel jedoch ohne Schütte;
- Fig. 11-13: schematische Schnittansichten des Gutaufnahmebehälters in Schließstellung, Zwischenstellung und Öffnungsstellung; und
- Fig. 14: eine Explosionsdarstellung des Gutaufnahmebehälters.

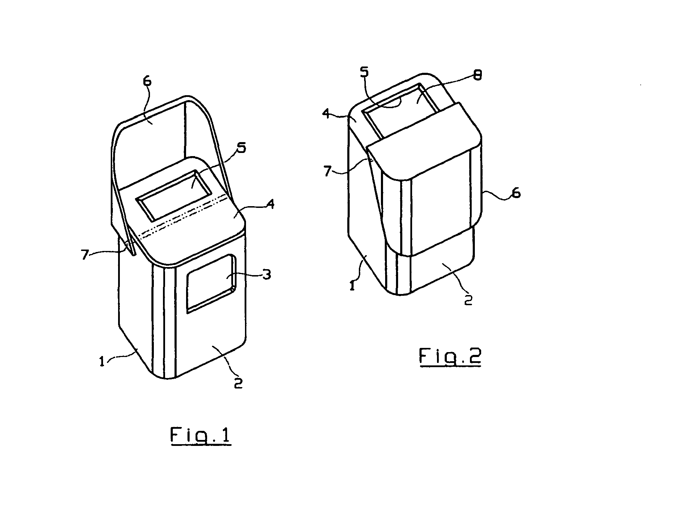

Fig. 1 zeigt den Gutaufnahmebehälter nach der Erfindung im geöffneten Zustand. Der Gutaufnahmebehälter hat hier einen quaderförmigen Behälter 1 aus lichtundurchlässigem Material, der an einer Seitenwand 2 ein Sichtfenster 3 aufweist, das aus durchsichtigem Material besteht. Der Behälter 1 ist teilweise durch einen Deckel 4 verschlossen, wobei dieser Deckel 4 eine Öffnung 5 aufweist, über die der Inhalt des Behälters 1 entnommen werden kann. Der Deckel 4 hält eine schwenkbare Schütte 6, deren Schwenkachse 7 zwischen dem Dekkel 4 und einem oberen Rand des Behälters 1 gehalten ist. Die Schwenkachse 7 verläuft parallel zu einer Ebene des Sichtfensters 3. Die Schwenkachse 7 ist mittig am oberen Rand von entsprechenden Seitenwänden des Behälters 1 angeordnet. An der Schwenkachse 7 ist eine Verschlußklappe 8 angebracht, die starr und insbesondere drehfest mit der Schwenkachse 7 verbunden ist. Vorzugsweise sind die Schütte 6, die Schwenkachse 7 und die Verschlußklappe 8 einstückig aus Kunststoff gespritzt.

Im geöffneten Zustand der Fig. 1 gibt die Verschlußklappe 8 die Öffnung 5 frei und die Schütte 6 gibt das Sichtfenster 3 frei.

Im geschlossenen Zustand, der in Fig. 2 dargestellt ist, ist die Öffnung 5 durch die Verschlußklappe 8 geschlossen und die Schütte 6 deckt das Sichtfenster 3 vollständig ab. Die Schütte 6 einschließlich der Verschlußklappe 8 ist aus lichtundurchlässigem Material, so daß im geschlossenen Zustand des Gutaufnahmebehälters dessen Inhalt lichtdicht abgeschlossen ist.

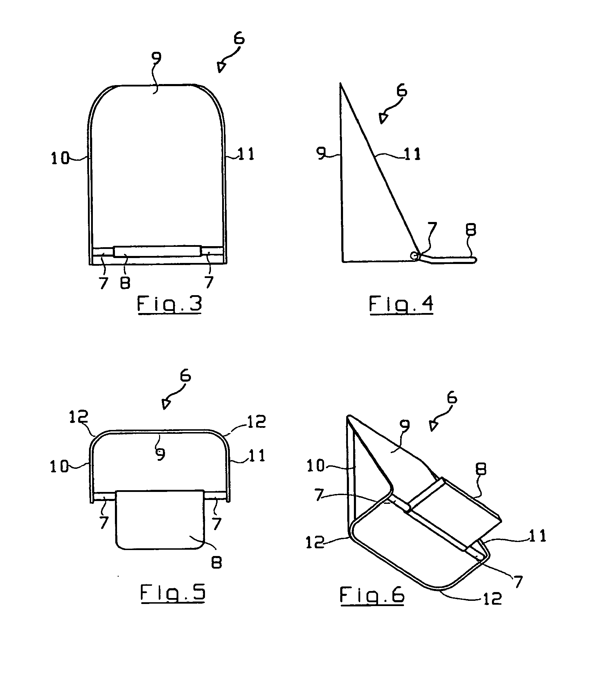

Die Fig. 3 bis 6 zeigen die Schütte 6 mit Schwenkachse 7 und Verschlußklappe 8 in drei Seitenansichten (Fig. 3 bis 5) und in perspektivischer Ansicht (Fig. 6). Die Schütte 6 hat eine Vorderwand 9 und zwei davon senkrecht abstehende Seitenwände 10 und 11, die in Seitenansicht (Fig. 4) etwa die Form eines rechtwinkligen Dreiecks haben. Die Seitenwände 10 und 11 sind dabei über eine Rundung 12 mit der Vorderwand 9 verbunden. Der Vorderwand 9 abgewandte Spitzen der Seitenwände 10 und 11 sind über die Schwenkachse 7 miteinander verbunden, wobei die Schwenkachse 7 drehfest mit den Seitenwänden 10 und 11 verbunden ist.

An der Schwenkachse 7 ist die Verschlußklappe 8 befestigt und zwar ebenfalls drehfest. Die Verschlußklappe 8 ist in Draufsicht (Fig. 5) rechteckig, wobei ihre Größe so gewählt ist, daß sie die Öffnung 5 (Fig. 1) vollständig überdeckt. Die Verschlußklappe 8 ist so an der Drehachse 7 angebracht, daß sie in etwa rechtwinklig von der Vorderwand 9 fortweist. Die Breite der Verschlußklappe 8 ist kleiner als der Abstand zwischen den beiden Seitenwänden 10 und 11, so daß beidseitig der Verschlußklappe 18 Abschnitte der Drehachse 7 frei zugänglich sind.

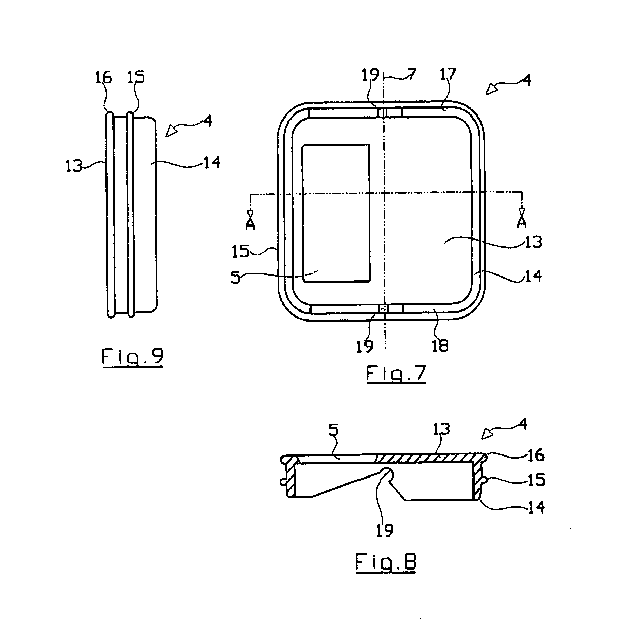

Die Fig. 7, 8 und 9 zeigen den Deckel 4 und zwar in Draufsicht (Fig. 7), geschnittener ersten Seitenansicht (Fig. 8 als Schnitt längs der Linie A-A der Fig. 7) und zweiter Seitenansicht (Fig. 9).

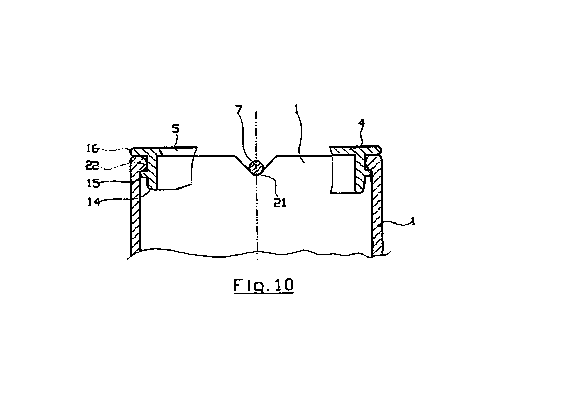

Der Deckel 4 hat eine im wesentlichen ebene Oberwand 13, von der ein ringförmiger Einsteckrand 14 absteht, der an die Form des Behälters 1 angepaßt ist. In der Oberwand 13 ist die Öffnung 5 ausgespart. Die Einsteckwand 14 und die Oberwand 13 haben jeweils einen seitlich vorspringenden Klemmwulst 15 bzw. 16, mit denen der Deckel 4 am Behälter 1 festklemmbar ist (vgl. insbesondere Fig. 10). An dem Behälter 1 ist ein nach innen vorspringender Wulst 22 vorgesehen, der zwischen die beiden Klemmwulste 15, 16 eingreift, womit der Deckel 4 fest am Behälter 1 gehalten wird, was weiter unten noch ausführlicher erläutert wird.

An zwei gegenüberliegenden Wänden 17 und 18 des Einsteckrandes 14 ist jeweils eine kreissegmentförmige Ausnehmung 19 vorgesehen, die als Lagerschale für die Schwenkachse 7 dient. Diese Ausnehmung 19 ist in Richtung zum freien Ende des Einsteckrandes 14 hin teilweise offen, so daß die Schwenkachse 7 problemlos eingesetzt werden kann. Wie sich aus der weiter unten folgenden Beschreibung ergibt, wird die Schwenkachse 7 somit durch die Ausnehmung 19 und den oberen Rand des Behälters 1 eindeutig fixiert.

Fig. 10 zeigt eine teilweise abgeschnittene Seitenansicht des Behälters 1 mit aufgesetztem Deckel 4 und der Schwenkachse 7 nach einer Variante der Erfindung, bei der im oberen Rand zweier gegenüberliegender Seitenwände 17 und 18 (in Fig. 7) des Behälters 1 eine Ausnehmung vorgesehen ist, die einen kreissegmentförmigen Boden aufweist, der einen Teil einer Lagerschale 21 für die Schwenkachse 7 bildet. Weiter ist in dieser Zeichnung ein Wulst 22 am oberen Behälterrand zu sehen, der zwischen die Klemmwülste 15 und 16 des Dekkels 4 eingreift und damit den Deckel 4 am Behälter 1 fixiert. Selbstverständlich sind der Deckel 4 und/oder der Behälter 1 aus elastischem Material, damit der Deckel 4 in den Behälter 1 eingesetzt werden kann.

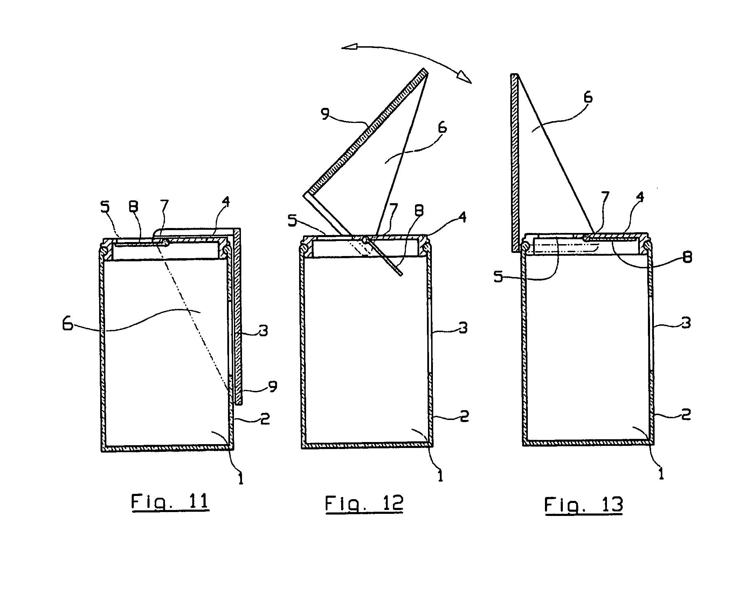

Die Fig. 11 bis 13 zeigen schematische Schnittansichten des Gewürzspenders in Schließstellung (Fig. 11), teilweise geöffneter Stellung (Fig. 12) und vollständig geöffneter Stellung (Fig. 13).

In der Schließstellung liegt die Vorderwand 9 der Schütte 6 an der Seitenwand 2 des Behälters 1 an und überdeckt das Sichtfenster 3 vollständig. Gleichzeitig liegt die Verschlußklappe 8 an der Innenfläche des Deckels 3 an und verschließt die Öffnung 5 vollständig.

In Fig. 12 ist die Schütte 6 in Richtung des Pfeiles um die Schwenkachse 7 verschwenkt, wodurch gleichzeitig die Verschlußklappe 8 mitgeschwenkt wird und die Öffnung 5 freigibt.

In der Öffnungsstellung der Fig. 13 ist die Schütte 6 im wesentlichen vertikal ausgerichtet und die Verschlußklappe 8 liegt an der Innenwand des Deckels 4 an, der damit auch einen Begrenzungsanschlag bildet. Die Schütte 6 schließt sich an die Öffnung 5 an, so daß beim Kippen des Behälters 1 dessen Inhalt in die Schütte 6 fällt und gezielt entnommen werden kann. Das Sichtfenster 3 ist in den Stellungen der Fig. 12 und 13 nicht mehr abgedeckt, so daß der Inhalt des Behälters durch das Sichtfenster 3 gesehen werden kann.

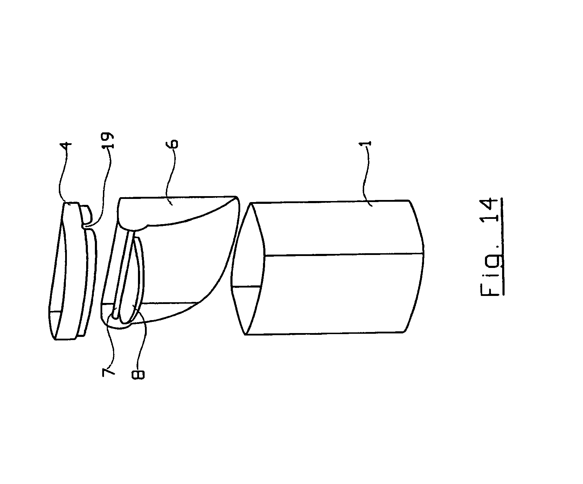

Fig. 14 verdeutlicht die einfache Montage der Schütte 6 durch den Deckel 4, der mit seinen Lagerschalen 19 die Schwenkachse 7 und damit auch die Schütte 6 mit Verschlußklappe 8 am Behälter 1 fixiert.

## Patentansprüche

1. Gutaufnahmebehälter mit einem Behälter (1), einem Deckel (4), der Öffnung (5) zum Innenraum des Behälters (1) aufweist, und mit einer um eine Schwenkachse (7) schwenkbaren Schütte (6), wobei die Öffnung (5) in einer ersten Grenzstellung der Schütte (6) verschlossen und in einer zweiten Grenzstellung der Schütte (6) geöffnet ist, **dadurch gekennzeichnet,**
- **daß** der Behälter (1) aus lichtundurchlässigem Material besteht,
- **daß** eine Wand (2) des Behälters (1) ein Sichtfenster (3) aus lichtdurchlässigem Material aufweist,
- **daß** die Schütte (6) so geformt und dimensioniert ist, daß sie in der ersten Grenzstellung das Sichtfenster (3) vollständig abdeckt und in der zweiten Grenzstellung das Sichtfenster (3) vollständig freigibt,
- **daß** die Schütte (6) drehfest mit einer Verschlußklappe (8) verbunden ist, die in der ersten Grenzstellung die Öffnung (5) vollständig verschließt und in der zweiten Grenzstellung die Öffnung (5) vollständig freigibt und
- **daß** die Verschlußklappe (8) senkrecht zu einer Vorderwand (9) der Schütte (6) angeordnet ist.

2. Gutaufnahmebehälter nach Anspruch 1, **dadurch gekennzeichnet, daß** der Deckel (4) eine Lagerschale (19) zur Aufnahme der Schwenkachse (7) aufweist.

3. Gutaufnahmebehälter nach Anspruch 2, **dadurch gekennzeichnet, daß** die Schütte (7) zwischen der Lagerschale (19) des Deckels (4) und Rändern des Behälters (1) gehalten ist.

4. Gutaufnahmebehälter nach einem der Ansprüche 1 bis 3, **dadurch gekennzeichnet, daß** die Schütte (6), die Schwenkachse (7) und die Verschlußklappe (8) einstückig aus Kunststoff sind.

5. Gutaufnahmebehälter nach Anspruch 3 oder 4, **dadurch gekennzeichnet, daß** an Rändern des Behälters (1) Teil-Lagerschalen (21) zur Lagerung der Schwenkachse (7) angebracht sind.

6. Gutaufnahmebehälter nach einem der Ansprüche 1 bis 5, **dadurch gekennzeichnet, daß** eine Wand (13) des Deckels (4) als Begrenzungsanschlag für eine Schwenkbewegung der Verschlußklappe (8) und damit auch der Schütte (6) ausgebildet ist.

7. Gutaufnahmebehälter nach einem der Ansprüche 1 bis 6, **dadurch gekennzeichnet, daß** die Schütte (6) eine vordere Wand (9) und zwei rechtwinklig davon abstehende Seitenwände (10, 11) aufweist, wobei die Seitenwände (10, 11) in Seitenansicht dreieckförmig sind und die Schwenkachse (7) an der Vorderwand (9) abgewandten Spitzen der Seitenwände (10, 11) angebracht ist.

## Claims

1. Product container comprising a container (1), a lid (4) incorporating the opening (5) to the interior of the container (1), and a dispenser (6) which can be pivoted about a pivot axis (7), the opening (5) being closed in a first limit position of the dispenser (6) and open in a second limit position of the dispenser (6), wherein
- the container (1) is made from opaque material,
- one wall (2) of the container (1) comprises a viewing window (3) made of transparent material,
- the dispenser (6) is shaped and dimensioned so that in the first limit position it completely covers the viewing window (3) and in the second limit position completely exposes the viewing window (3),
- the dispenser (6) is connected in a non-rotatable manner to a closing flap (8), which in the first limit position completely closes the opening (5) and in the second limit position completely opens the opening (5) and
- the closing flap (8) is arranged perpendicular to a front wall (9) of the dispenser (6).

2. Product container as claimed in claim 1, wherein the lid (4) comprises a bearing shell (19) for mounting the pivot axis (7).

3. Product container as claimed in claim 2, wherein the dispenser (7) is secured between the bearing shell (19) of the lid (4) and edges of the container (1).

4. Product container as claimed in one of claims 1 to 3, wherein the dispenser (6), the pivot axis (7) and the closing flap (8) are made in one piece from plastic.

5. Product container as claimed in claim 3 or 4, wherein part bearing shells (21) for mounting the pivot axis (7) are fitted to the edges of the container (1).

6. Product container as claimed in one of claims 1 to 5, wherein one wall (13) of the lid (4) is designed as a limit stop for a pivoting movement of the closing flap (8) and thereby also of the dispenser (6).

7. Product container as claimed in one of claims 1 to 6, wherein the dispenser (6) comprises a front wall (9) and two side walls (10, 11) projecting at right angles therefrom, and the side walls (10, 11) are triangular in side view and the pivot axis (7) is attached to points of the side walls (10, 11) facing away from the front wall (9).

## Revendications

1. Récipient destiné à la réception de marchandises avec un récipient (1), un couvercle (4), l'ouverture (5) vers l'espace intérieur du récipient (1), et avec un organe de déversement (6) apte à pivoter autour d'un axe de pivotement (7), où l'ouverture (5), dans une première position limite de l'organe de déversement (6) est fermée, et dans une deuxième position limite de l'organe de déversement (6) est ouverte, **caractérisé en ce**
- **que** le récipient (1) est réalisé en matériau opaque,
- **qu'**une paroi (2) du récipient (1) présente une fenêtre de vision (3) en matériau transparent,
- en ce que l'organe de déversement (6) est formé et dimensionné de façon que, dans la première position limite, il recouvre entièrement la fenêtre de vision (3) et, dans la deuxième position limite, il libère entièrement la fenêtre de vision (3),
- en ce que l'organe de déversement (6) est relié d'une manière solidaire en rotation à un capuchon de fermeture (8) qui, dans la première position limite, ferme entièrement l'ouverture (5) et, dans la deuxième position limite, libère entièrement l'ouverture (5) et
- en ce que le capuchon de fermeture (8) est disposé perpendiculairement à une paroi avant de l'organe de déversement (6).

2. Récipient destiné à la réception de marchandises selon la revendication 1, **caractérisé en ce que** le couvercle (4) présente une coque de palier (19) pour la réception de l'axe de pivotement (7).

3. Récipient destiné à la réception de marchandises selon la revendication 2, **caractérisé en ce que** l'organe de déversement (6) est retenu entre la coque de palier (19) du couvercle (4) et les bords du récipient (1).

4. Récipient destiné à la réception de marchandises selon l'une des revendications 1 à 3, **caractérisé en ce que** l'organe de déversement (6), l'axe de pivotement (7) et le capuchon de fermeture (8) sont réalisés en une pièce en matériau synthétique.

5. Récipient destiné à la réception de marchandises selon la revendication 3 ou 4, **caractérisé en ce que** des coques partielles (21) pour le logement de l'axe de pivotement (7) sont disposées aux bords du récipient (1).

6. Récipient destiné à la réception de marchandises selon l'une des revendications 1 à 5, **caractérisé en ce qu'**une paroi (13) du couvercle (4) est réalisée comme butée de délimitation pour un mouvement de pivotement du capuchon de fermeture (8) et donc aussi de l'organe de déversement (6).

7. Récipient destiné à la réception de marchandises selon l'une des revendications 1 à 6, **caractérisé en ce que** l'organe de déversement (6) présente une paroi avant (9) et deux parois latérales (10, 11) s'étendant perpendiculairement de celle-ci, où les parois latérales (10, 11), en une vue de côté, sont triangulaires, et l'axe de pivotement (7) est disposé à des pointes éloignées de la paroi avant (9) des parois latérales (10, 11).
